# EUROPEAN PATENT SPECIFICATION

(11) **EP 3 526 282 B1**
(45) Date of publication and mention of the grant of the patent: **08.12.2021**
(21) Application number: 17791002.3
(22) Date of filing: 13.10.2017
(51) Int. Cl.: C08K 3/22, C08K 5/521, C08K 13/02, C09J 9/00, C09J 7/38

(54) **THERMALLY CONDUCTIVE ACRYLIC ADHESIVE TAPE AND THE MANUFACTURING THEREOF**
WÄRMELEITENDES ACRYL-KLEBEBAND UND HERSTELLUNG DAVON
RUBAN ADHÉSIF ACRYLIQUE THERMOCONDUCTEUR ET SON PROCÉDÉ DE FABRICATION

(30) Priority: 13.10.2016 EP 16193615
(43) Date of publication of application: 21.08.2019
(73) Proprietor: Olympic Holding B.V., 5803 AN Venray (NL)
(72) Inventor: HERMANS, Ko, 6031 PA Nederweert (NL); KRANZ, Bart, 5375 AR Reek (NL)
(74) Representative: CPW GmbH
(86) International application number: PCT/EP2017/076220
(87) International publication number: WO 2018/069512

(56) References cited:
- EP-A1- 0 878 527
- EP-A1- 1 433 829
- EP-A1- 2 698 406
- US-A1- 2016 009 963

## Description

Thermal management is important for electrical components such as for example Light Emitting Diodes (LEDs), Integrated Circuit (IC) boards and car batteries. To avoid overheating, the heat produced by these components needs to be removed via a heat sink. To establish a heat conducting path between these components, one often uses a thermal interface material. This material is placed between the heat source and heat sink and provides an efficient pathway for conducting heat. Thermal interface materials come in a variety of forms such as greases, glues, pads and tapes. The current invention relates to thermally conductive acrylic adhesive tapes and the manufacturing thereof.

Various compositions for thermally conductive acrylic adhesive tapes are known from prior art.

For example JP 11-269438 teaches an electrical insulating heat-conductive flame-retardant pressure-sensitive adhesive that comprises 100 part by weight of pressure-sensitive adhesive composition comprising 100 part by weight of acrylic copolymer or partial polymer prepared from a monomer mixture consisting essentially of 50 part by weight or above of alkyl (meth)acrylate with a 4-14C alkyl and 0.5-10 part by weight of copolymerizable polar vinyl monomer and 10-100 part by weight of tackifier and 50-250 part by weight of metal hydrate compound.

Another example is KR 100482928 which teaches a thermally conductive pressure sensitive adhesive tape that comprises 1-20 parts by weight of an acryl monomer; 80-99 parts by weight of an acryl oligomer; 0.005-2 parts by weight of a reaction initiator; 50-200 parts by weight of thermally conductive filler; and 5-50 parts by weight of a plasticizer. Where the thermally conductive filler is at least one selected from the group consisting of silica, boron nitride, silicon nitride, titanium dioxide, magnesium oxide, zinc oxide, nickel oxide, copper oxide, aluminum oxide, iron oxide, magnesium hydroxide and aluminum hydroxide.

The thermally conductive acrylic adhesive tapes from the prior art are typically made by filling a syrup based on a partially polymerized mixture of alkyl (meth)acrylate(s)s monomer(s) and polar group containing monomer(s),with thermally conductive fillers and other components to form a coatable syrup. Said coatable syrup is coated onto a substrate and upon exposure to UV light the monomers are polymerized into an acrylic copolymer transforming the coatable syrup into a thermally conductive acrylic adhesive tape. As a thermally conductive filler one often choses a metal hydrate (also referred to as a metal hydroxide) such as aluminum hydroxide. Aluminum hydroxide is transparent to UV light and is therefore often preferred because of its compatibility with the UV hardening process. To achieve high thermal conductivity it is essential to incorporate as much thermally conductive filler into the acrylic adhesive tape as possible, without compromising the required bonding/mechanical properties of the tape. Another challenge is to keep the viscosity of the coatable syrup (which includes the thermally conductive fillers) low enough such that it can be processed into a thermally conductive acrylic adhesive tape. Especially air/gas pockets are difficult to remove from coatable syrup with a high viscosity. As a result, a thermally conductive tape manufactured from high viscosity coatable syrup might contain a significant amount of air/gas voids. Said air/gas pockets can reduce the overall thermal conductivity of the thermally conductive adhesive tape significantly. Yet another challenge is to make a coatable syrup which is stable enough (e.g. does not gel or phase-separate) such that it can be processed to form a thermally conductive adhesive acrylic adhesive tape.

A solution to the lack of bonding/mechanical properties of a thermal conductive adhesive tape with high thermal conductivity is presented in US 2014/0037924 which teaches a flame-retardant thermally-conductive pressure-sensitive adhesive sheet comprising: a substrate and a flame-retardant thermally-conductive pressure-sensitive adhesive layer provided on at least one surface of the substrate, wherein the substrate includes a polyester film with a thickness of 10-40 micron. The flame-retardant thermally-conductive pressure-sensitive adhesive layer contains 100 parts by weight of (a) an acrylic polymer and 100 to 500 parts by weight of (b) a hydrated metal compound. US 2014/0037924 teaches that a polyester film within a given thickness range improves the flame retardancy of the flame-retardant-thermally-conductive pressure-sensitive adhesive without harming the thermally conductive properties and without said polyester film the flame-retardant-thermally-conductive pressure-sensitive adhesive sheet would easily tear or wrinkle upon handling. In other words, the polyester layer provides mechanical properties to the sheet making it easy to handle.
The thermally-conductive pressure-sensitive adhesive sheets of US 2014/0037924 still suffer from the fact that the thermal conductivity is often not high enough, in particular for demanding applications such as car battery-packs and other high-end electronic applications.

The present invention solves these problems by providing a thermally conductive acrylic adhesive tape, which comprises 600 - 800 parts by weight of a metal hydroxide, and 100 parts by weight of an acrylic copolymer that is based on least one alkyl (meth)acrylate monomer and 1 - 30 parts by weight of a polar group containing monomer, wherein the thermally conductive acrylic adhesive tape also comprises 10 - 50 parts by weight of a phosphate ester and 10 - 50 parts by weight of a plasticizer.

The addition of a phosphate ester and a plasticizer in the specified amounts of 10 to 50 parts per weight each, ensures that much more metal hydroxide could be dispersed in the adhesive tape, without jeopardizing the other properties, such as its flexibility.

One of the objectives of the current invention is a thermal conductive adhesive tape which comprises a high content of a thermal conductive metal hydroxide filler (and thus a high thermal conductivity) as well as good mechanical and adhesive properties without the necessity of an additional substrate..

US 2014/003792 also teaches that the acrylic polymer (a) should consist of an alkyl(meth)acrylate monomer and a polar monomer, whereas said polar monomer should preferentially not be a carboxyl group containing monomer. Carboxyl group containing monomers, such as (meth)acrylic acid or itaconic acid, reduce the fluidity of the adhesive and overall adhesive properties of the pressure sensitive adhesive sheet. A thermally conductive adhesive tape which comprises an acrylic copolymer that is based on non-carboxylic polar groups is however very weak and difficult to handle. This particular issue is resolved by incorporating a 10-40 micron thick substrate into the thermally conductive adhesive tape composition. Albeit this increases the overall mechanical properties of the tape, it does not improve the adhesive properties and also lowers the overall thermal conductivity of the tape by incorporating a non-thermally conductive element in its composition.

US 2014/0037924 further teaches that the above mentioned problems are encountered in particular when the thermally conductive acrylic adhesive tape is manufactured from metal hydroxide filler and an acrylic copolymer which comprises of carboxyl group containing monomers. Although the exact mechanism is, at least to the inventor's knowledge, not completely understood, the hydroxide groups of the thermally conductive fillers appear to react with the carboxylic groups in the acrylic copolymer. This interaction causes the following:
1) The viscosity of the coatable syrup increases quickly when the filler content is increased. This limits the maximum filler content which can be obtained, and thus the overall thermal conductivity of the tape, considerably.
2) The fluidity of the thermally conductive adhesive tape is restricted by these interactions. Especially at high filler contents, the tapes become rigid and non-tacky. This also limits the maximum amount of filler which can be added, and thus the thermal conductivity of the adhesive tape.
3) The coatable syrup tends to gelate within several hours/days after mixing. To avoid these problems, carboxyl groups are often not used in the composition of the acrylic copolymer. Alternatively, other polar monomers (such as n-vinyl pyrrolidone, n-vinyl caprolactam and acrylamide) are used. The thermally conductive adhesive tapes based on these monomers are found to have a relatively low cohesion and poor adhesion properties.

In contrary to the teachings of US2014/0037924, in the present invention the polar monomer is most preferably a monomer that contains a carboxyl group. An example of such a monomer isacrylic acid.

In contrary to the prior art, the inventors have found that specific concentrations of a plasticizer and a phosphate ester can be used to create a thermally conductive adhesive tape with a high concentration of metal hydroxide and thus a very high thermal conductivity. Surprisingly the composition according to the invention allows thermally conductive adhesive tapes to be made with a metal hydroxide content of 600 - 800 parts by weight at 100 parts by weight of acrylic polymer and thermal conductivity of 2 W / m K and higher can be achieved. Even more surprising, and in contrary to what prior art teaches, the invention can be used to create well adhering and flexible thermally conductive adhesive tapes that have good mechanical properties (and without the need for additional support layers), when the thermally conductive acrylic adhesive tape comprises co-polymers which contain carboxyl groups.

This makes the thermally conductive acrylic adhesive tape according to the invention ideal for use as a thermal interface material and in particular were large non-flat components (such as car battery-packs) need to be adhered.

The thermally conductive acrylic adhesive tape according to the invention is made by a procedure in which first a mixture of alkyl (meth)acrylate(s) monomer(s) and polar group containing monomer(s) is partially polymerized. The partial polymerized mixture of alkyl (meth)acrylate(s) monomer(s) and polar group containing monomer(s) is referred to as syrup. Next, other components (e.g. thermally conductive filler, crosslinking monomer, initiators, etc.) are added to said syrup to form a coatable syrup. The coatable syrup is coated onto a substrate and under inert conditions exposed to UV light. Inert conditions are conditions that exclude contact between (environmental) oxygen and the coatable syrup. Such conditions could for example be achieved by placing the coated syrup (after coating on a substrate) in a nitrogen or argon atmosphere during UV exposure. Alternatively, it is possible to cover the coatable syrup with another UV transparent substrate during UV exposure. During exposure to UV light the monomers are polymerized into an acrylic copolymer transforming the coatable syrup into a thermally conductive acrylic adhesive tape. In a preferred embodiment of the invention, the coatability of the coatable syrup is improved by heating the coatable syrup prior and/or during coating. The syrup is typically heated to 40 to 90 °C, depending on the exact composition of the coatable syrup and the required coating thickness. Higher temperatures can be used, but are normally not required to achieve a good result.

In a preferred embodiment, the substrate is a temporary carrier film that does not form an integral part of the actual thermal conductive pressure sensitive adhesive sheet. Instead is only used for coating the coatable syrup. After UV curing the coatable syrup it will be removed from the thermal conductive pressure sensitive adhesive sheet, thus not forming an integral part of said sheet in the actual final application. A suitable temporary carrier film is a 50 micron thick film of siliconized BOPET. During production the coatable syrup is coated on the siliconized side of the BOPET film such that easy removal of the temporary carrier film is facilitated.

In a preferred embodiment of the current invention the syrup has viscosity < 1 Pas (250 rpm, Brookfield) and more preferably <0.5 Pas (250 rpm, Brookfield). A syrup with a low viscosity it is preferably obtained by adding a chain control agent to the mixture of alkyl (meth)acrylate(s) and polar group containing monomer(s). A chain control agent is a component that interferes with the radical polymerization by terminating a propagating radical and/or transferring a propagating radical to another reactive species (e.g. monomer). Most preferably said chain control agent is a chain transfer agent such as for example n-dodecyl mercaptan. The presence of a chain control agent significantly reduces the molecular weight of the polymer which is formed during the partial polymerization of the mixture of alkyl (meth)acrylate(s) and carboxyl group containing monomer(s). As a result, a syrup is obtained which has a low viscosity. The amount of metal hydroxide that can be added to a syrup which has a low viscosity (<1 Pas, 250 rpm, Brookfield) is much higher than the amount of metal hydroxide that can be added to a syrup which has a high viscosity (>1 Pas, 250 rpm, Brookfield).

A thermally conductive acrylic adhesive tape is to be understood as a sheet like material which can, but not necessarily has to, be wound in a roll. A small sheet like thermally conductive acrylic adhesive tape which is not wound into a roll is sometimes referred to as a pad instead of a tape. In the current invention both physical forms (i.e. a pad and a tape) are considered to be the same.

The thermally conductive acrylic adhesive tape according the invention has a thickness of 10 to 5000 micron, preferably the thickness is between 250 and 3000 micron and most preferably between 500 and 2000 micron.

In a preferred embodiment, the thermally conductive acrylic adhesive tape according to the invention comprises at least on one side a release liner. A release liner is a temporary cover layer that is protecting the adhesive tape and facilitates handling. Examples of release liner are PE or PP film or paper & plastic film which have been treated with an anti-sticking layer such as a layer of silicones. The thickness of a release liner is typically between 50-200 micron.

The thermally conductive acrylic adhesive tape according to the invention has preferably a thermal conductivity of at least 2 W/m K, preferably more than 2.5 W/m K and most preferably more than 2.8 W/m K. The thermal conductivity has to be determined by using the modified transient plane source technique.

The thermally conductive acrylic adhesive tape according to the invention comprises a metal hydroxide. Preferably said metal hydroxide is aluminium hydroxide which is also known as aluminium trihydrate (ATH). The average particle size of the ATH is preferably below 150 micron, but larger than 0.5 micron. Most preferably the ATH has a multi-modal grain size distribution. This could for example be a bi- or tri-modal grain size distribution. A multi-modal grain size distribution can be achieved by combining particles of different grain sizes. E.g. a bi-modal grain size distribution can be achieved by combining particles with an average diameter of 5 micron and particles with an average diameter of 80 micron. The smaller particles will fill in the gaps between the larger particles allowing a dense stacking of particles. Examples of suitable aluminium hydroxides are Apyral 20x (Nabaltec) and Onyx Elite (Huber)..

The thermally conductive acrylic adhesive tape according to the invention comprises a 10-50 parts by weight of a phosphate ester to 100 parts by weight of acrylic copolymer. Preferably the thermally conductive tape according to the invention comprises a 15-45 parts by weight of a phosphate ester to 100 parts by weight of acrylic copolymer. Said phosphate ester can be a phosphoric monoester of a suitable polymer, a phosphoric diester of suitable polymer, a phosphoric diester of suitable polymer or a derivative thereof. The phosphate ester might be used alone or in a combination of 2 or more.

The thermally conductive acrylic adhesive tape according to the invention comprises a 10-50 parts by weight of a plasticizer to 100 parts by weight of acrylic copolymer. Preferably the thermally conductive tape according to the invention comprises a 15-45 parts by weight of a plasticizer to 100 parts by weight of acrylic copolymer. Said plasticizer is preferably a terephthalate such as dibutyl terephthalate or dioctyl terephthalate.

The thermally conductive acrylic adhesive tape according to the invention comprises an acrylic copolymer that is based on at least one alkyl (meth)acrylate and 1 - 30 parts by weight of a polar group containing monomer. Various alkyl (meth)acrylates can be used such as for example dodecyl-acrylate, decyl - acrylate, iso-nonyl-acrylate, iso-octyl-acrylate, 2-ethylhexyl acrylate, hexyl acrylate, butyl-acrylate, ethyl-acrylate and their methacrylic counterparts. The preferred alkyl acrylates for the invention are iso-octyl acrylate and 2-ethyl hexyl acrylate.. The polar group containing monomer can for example be n-vinyl pyrrolidone (nVP), acrylic acid (AA), methacrylic acid and itaconic acid n-vinyl caprolactam (nVC) and acryloyl morpholine (ACMO). Most preferably the polar group monomer is a carboxyl group containing monomer such as for example (meth)acrylic acid or itaconic acid.

The thermally conductive acrylic adhesive tape according to the invention may further comprise a photo-initiator, such as for example 2,2-dimethoxy-2-phenyl acetophenone. A photo-initiators is used to polymerize the coatable syrup via exposure to UV light into the thermally conductive acrylic adhesive tape. Typically, a concentration of 0.1 - 2 wt.-% of photo-initiator is added to the coatable syrup. Said photo-initiators might not be fully consumed during this process and residual photo-initiator can therefore be present in the thermally conductive acrylic adhesive tape.

The thermally conductive acrylic adhesive tape according to the invention may also further comprise a crosslinking monomer. Said monomer can be a multifunctional acrylate such as for example 1,6-hexanedioldiacrylate or 1,4-butanedioldiacrylate and is typically used in a concentration of 0.01 to 1 wt.-% of the thermally conductive acrylic adhesive tape composition.

Other additives such as tackifiers, dispersing agents, levelling agents, colorants, anti-oxidants, UV stabilizers might be added to the composition of the thermally conductive acrylic adhesive tape.

### Examples

### Comparative example 1

A mixture is formed by mixing 9000parts 2-ethylhexyl acrylate, 1000 parts n-vinyl caprolactam and 4 parts.-% 2,2-dimethoxy-2-phenyl acetophenone. In total 600 grams of said mixture is placed in a glass container and said mixture is degassed for 5 minutes by flushing nitrogen at a rate of 3 liter/minute. After 5 minutes, said mixture is exposed to UV light. The UV light consists for >80% of UVA light (300 - 400 nm) and has an intensity of 10 mJ/cm2. The exposure to UV light is stopped when a syrup is obtained which as a viscosity of approx. 1 A coatable mixture was formed by mixing 50 parts of syrup with 50 parts of aluminium hydroxide (Onyx Elite - Huber).

### Example 1:

A syrup was prepared according comparative example 1.

A coatable syrup was prepared by mixing 443 parts of syrup with 500 parts of aluminium hydroxide (Onyx Elite - Huber), 23 parts of a phosphoric acid ester and 34 parts of a plasticizer.

The viscosity of comparative example 1 and example 1 was determined with a Brookfield rheometer and the results are given in the table below. The results clearly show that example 1 has a much lower viscosity (with the same content of aluminium hydroxide) than comparative example 1. Alternatively, when not aiming for a lower viscosity, it is possible to increase the amount metal hydroxide in example 1 before reaches the same viscosity as found in comparative example 1. The results show that a lower viscosity and/or higher content of metal hydroxide can be achieved by using a specific amount of phosphoric acid ester and plasticizer in the coatable syrup.

| | Comparative example 1 | Example 1 |
|---|---|---|
| 25 rpm | 11,096 mPas | 2,540 mPas |

### Example 2:

A mixture of is formed by mixing 9000 parts 2-ethylhexyl acrylate, 1000 parts acrylic acid, 4 parts 2,2-dimethoxy-2-phenyl acetophenone and 2.5 parts of n-dodecyl mercaptan. In total 600 grams of said mixture is placed in a glass container and said mixture is degassed for 5 minutes by flushing nitrogen at a rate of 3 liter/minute. After 5 minutes, said mixture is exposed to UV light. The UV light consists for >80% of UVA light (300 - 400 nm) and has an intensity of 10 mJ/cm2. The exposure to UV light is stopped when a monomer conversion of approx. 10% is achieved and a syrup is formed which has a viscosity of approx. 500 mPas. Next, a coatable syrup is formed by mixing 10.94 parts of syrup with 0.012 parts of 1,6-hexanedioldiacrylate, 0.048 parts of 2,2-dimethoxy-2-phenyl acetophenone, 2.3 parts of a phosphoric acid polyester, 3.4 parts of dibutyl terephthalate and 83.3 parts of aluminium hydroxide (Apyral 20x - Nabaltec). The coatable syrup has a viscosity of 20 Pas (250 rpm; Brookfield) at 25 ° C. Air bubbles are removed from the coatable syrup by degassing the coatable syrup for 10 minutes under a vacuum (<10 mbar).

A 1.5 mm thick layer of coatable syrup is coated onto a siliconized BOPET film, cover with a second siliconized BOPET film and exposed to UV light for 2.5 minutes. The UV light consists for >80% of UVA light and has an intensity of 10mJ/cm2. During the exposure to UV light, the heat generated by the UV initiated polymerization of the coatable syrup is removed by blowing air over the outer surfaces of the siliconized BOPET films. After removal of the siliconized BOPET films a thermally conductive acrylic adhesive tape is obtained.

The thermal conductivity of said thermally conductive acrylic adhesive tape is determined by using the modified transient plane source technique and found to be 3.0 W / m K. Example 2 shows that a highly thermally conductive acrylic tape can be manufactured by using the composition according to the invention.

### Example 3:

The thermally conductive acrylic adhesive tape is made according to example 2, except that 1000 parts of n-vinyl caprolactam is used instead of 1000 parts acrylic acid.

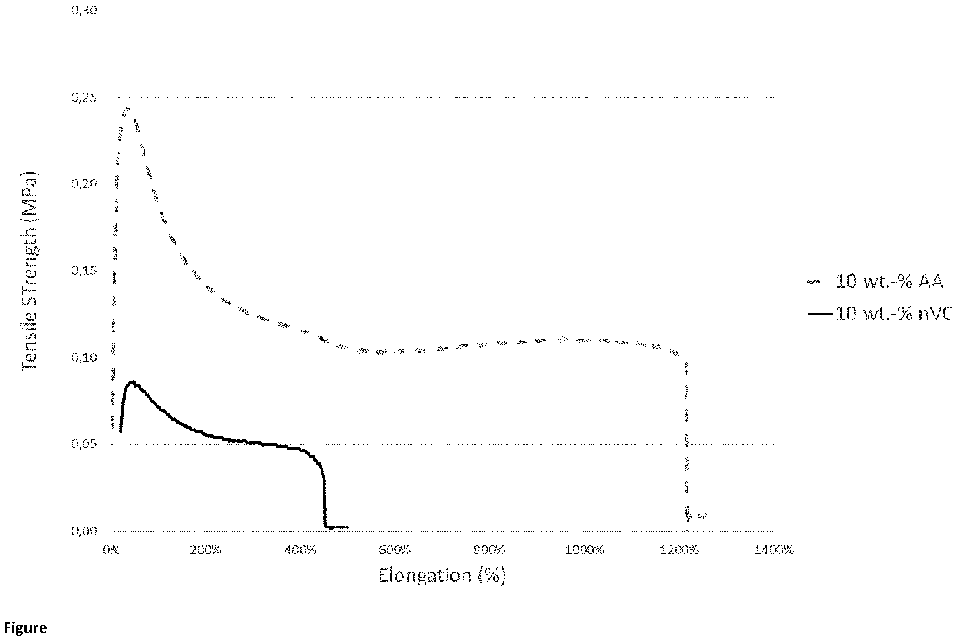

The mechanical properties of the thermally conductive acrylic adhesive tape of example 2 and example 3 have been determined by measuring the stress-strain curve, displayed as Figure. The results are given in the figure below. The results clearly show that the mechanical properties of the thermally conductive acrylic adhesive tape which comprises an acrylic copolymer based on 1000 parts acrylic acid has better mechanical properties. The tensile strength and maximum elongation are significantly higher.

The bonding properties of the thermally conductive acrylic adhesive tape of example 2 and example 3 have been determined by measuring the 90 degrees peel strength on stainless steel substrates, an aluminium backing foil, and a dwell time of 8 hours at room temperature. The results are given in the table below. The results clearly show that the thermally conductive adhesive tape according to example 2 has much better peel strengths (bonding properties).

| | 1000 parts acrylic acid | 1000 parts n-vinyl caprolactam |
|---|---|---|
| 90 degree peel strength | 13.5 N/inch | 3.9 N/inch |

## Claims

1. A thermally conductive acrylic adhesive tape, which comprises 600 - 800 parts by weight of a metal hydroxide, 100 parts by weight of an acrylic copolymer that is based on least one alkyl (meth)acrylate and 1 - 30 parts by weight of a carboxyl group containing monomer, **characterized in that** the thermally conductive acrylic adhesive tape also comprises 10 - 50 parts by weight of a phosphate ester and 10 - 50 parts by weight of a terephthalate.

2. The thermally conductive acrylic adhesive tape of any of the preceding claims, **characterized in that** it has a thickness of 10 to 5000 micron, preferably between 250 and 3000 micron and most preferably between 500 and 2000 micron.

3. The thermally conductive acrylic adhesive tape of any of the preceding claims, **characterized in that** said metal hydroxide is aluminium hydroxide.

4. The thermally conductive acrylic adhesive tape of any of the preceding claims, **characterized in that** it comprises a 15-45 parts by weight of a phosphate ester to 100 parts by weight of acrylic copolymer.

5. The thermally conductive acrylic adhesive tape of any of the preceding claims, **characterized in that** it comprises 15-45 parts by weight of a terephthalate to 100 parts by weight of acrylic copolymer.

6. The thermally conductive acrylic adhesive tape of any of the preceding claims, **characterized in that** it comprises a crosslinking monomer, such as 1,6-hexanedioldiacrylate and/or 1,4-butanedioldiacrylate.

7. Process for making a thermally conductive acrylic adhesive tape comprising the steps of partially polymerizing a mixture of 100 parts by weight of an acrylic copolymer that is based on at least one alkyl (meth)acrylate_and 1-30 part by weight of a carboxyl group containing monomer(s) to obtain a syrup, then adding further components, as thermally conductive fillers comprising 10 - 50 parts by weight of a phosphate ester and 10 - 50 parts by weight of a terephthalate, crosslinking monomers, initiators, and 600 - 800 parts by weight of a metal hydroxide to said syrup to form a coatable syrup, and coating said coatable syrup onto a carrier film, followed by polymerizing said coatable syrup by UV light and under inert conditions.

8. The process of claim 10, **characterized in that** a chain control agent is added to the mixture of alkyl (meth)acrylate(s) and polar monomer(s).

9. The process of claim 11, **characterized in that** the chain control agent is n-dodecyl mercaptan.

## Patentansprüche

1. Wärmeleitfähiges Acrylklebeband, das 600-800 Gewichtsteile eines Metallhydroxids, 100 Gewichtsteile eines Acryl-Copolymers, das auf mindestens einem Alkyl(meth)acrylat basiert, und 1 - 30 Gewichtsteile eines carboxylgruppenhaltigen Monomers umfasst, **dadurch gekennzeichnet, dass** das wärmeleitfähige Acrylklebeband ebenfalls 10 - 50 Gewichtsteile eines Phosphatesters und 10 - 50 Gewichtsteile eines Terephthalats umfasst.

2. Wärmeleitfähiges Acrylklebeband nach einem der vorstehenden Ansprüche, **dadurch gekennzeichnet, dass** es eine Dicke von 10 bis 5000 Mikrometer, vorzugsweise zwischen 250 und 3000 Mikrometer und am stärksten bevorzugt zwischen 500 und 2000 Mikrometer aufweist.

3. Wärmeleitfähiges Acrylklebeband nach einem der vorstehenden Ansprüche, **dadurch gekennzeichnet, dass** es sich bei dem Metallhydroxid um Aluminiumhydroxid handelt.

4. Wärmeleitfähiges Acrylklebeband nach einem der vorstehenden Ansprüche, **dadurch gekennzeichnet, dass** es ein 15-45 Gewichtsteile eines Phosphatesters auf 100 Gewichtsteile Acryl-Copolymer umfasst.

5. Wärmeleitfähiges Acrylklebeband nach einem der vorstehenden Ansprüche, **dadurch gekennzeichnet, dass** es 15 - 45 Gewichtsteile eines Terephthalats auf 100 Gewichtsteile Acryl-Copolymer umfasst.

6. Wärmeleitfähiges Acrylklebeband nach einem der vorstehenden Ansprüche, **dadurch gekennzeichnet, dass** es ein vernetzendes Monomer, wie etwa 1,6-Hexandioldiacrylat und/oder 1,4-Butandioldiacrylat umfasst.

7. Verfahren zur Herstellung eines wärmeleitfähigen Acrylklebebands, das die Schritte des teilweisen Polymerisierens einer Mischung aus 100 Gewichtsteilen eines Acryl-Copolymers, das auf mindestens einem Alkyl(meth)acrylat basiert, und 1 - 30 Gewichtsteil eines carboxylgruppenhaltigen Monomers/Monomeren, um einen Sirup zu erhalten, dann des Zugebens weiterer Komponenten als wärmeleitfähige Füllstoffe, die 10 - 50 Gewichtsteile eines Phosphatesters und 10 - 50 Gewichtsteile eines Terephthalats, vernetzende Monomere, Initiatoren und 600 - 800 Gewichtsteile eines Metallhydroxids umfassen, zu dem Sirup, um einen auftragbaren Sirup zu bilden, und des Auftragens des auftragbaren Sirups auf einen Trägerfilm, gefolgt vom Polymerisieren des auftragbaren Sirups mittels UV-Licht und unter inerten Bedingungen umfasst.

8. Verfahren nach Anspruch 10, **dadurch gekennzeichnet, dass** der Mischung aus Alkyl(meth)acrylat(en) und polarem/n Monomer(en) ein Kettensteuerungsmittel zugegeben wird.

9. Verfahren nach Anspruch 11, **dadurch gekennzeichnet, dass** es sich bei dem Kettensteuerungsmittel um n-Dodecylmercaptan handelt.

## Revendications

1. Bande adhésive acrylique thermoconductrice, qui comprend 600 - 800 parties en poids d'un hydroxyde métallique, 100 parties en poids d'un copolymère acrylique qui est à base d'au moins un (méth)acrylate d'alkyle et 1 - 30 parties en poids d'un monomère contenant un groupe carboxyle, **caractérisée en ce que** la bande adhésive acrylique thermoconductrice comprend également 10 - 50 parties en poids d'un ester phosphate et 10 - 50 parties en poids d'un téréphtalate.

2. Bande adhésive acrylique thermoconductrice selon l'une quelconque des revendications précédentes, **caractérisée en ce qu'**elle a une épaisseur de 10 à 5 000 microns, de préférence, entre 250 et 3 000 microns et le plus préférentiellement, entre 500 et 2 000 microns.

3. Bande adhésive acrylique thermoconductrice selon l'une quelconque des revendications précédentes, **caractérisée en ce que** ledit hydroxyde métallique est de l'hydroxyde d'aluminium.

4. Bande adhésive acrylique thermoconductrice selon l'une quelconque des revendications précédentes, **caractérisée en ce qu'**elle comprend une 15-45 parties en poids d'un ester de phosphate à 100 parties en poids de copolymère acrylique.

5. Bande adhésive acrylique thermoconductrice selon l'une quelconque des revendications précédentes, **caractérisée en ce qu'**elle comprend 15-45 parties en poids d'un téréphtalate à 100 parties en poids de copolymère acrylique.

6. Bande adhésive acrylique thermoconductrice selon l'une quelconque des revendications précédentes, **caractérisée en ce qu'**elle comprend un monomère de réticulation, tel que 1,6-hexanedioldiacrylate et/ou 1,4-butanedioldiacrylate.

7. Procédé de fabrication d'une bande adhésive acrylique thermoconductrice comprenant les étapes de polymérisation partielle d'un mélange de 100 parties en poids d'un copolymère acrylique qui est à base d'au moins un (méth)acrylate d'alkyle et de 1-30 partie en poids d'un/de monomère(s) contenant un groupe carboxyle pour obtenir un sirop, puis l'ajout d'autres composants, tels que des charges thermoconductrices comprenant 10 - 50 parties en poids d'un ester phosphate et 10 - 50 parties en poids d'un téréphtalate, des monomères de réticulation, des initiateurs, et 600 - 800 parties en poids d'un hydroxyde métallique audit sirop pour former un sirop à enduire, et l'enduction dudit sirop à enduire sur un film support, suivie par la polymérisation dudit sirop à enduire par une lumière UV et dans des conditions inertes.

8. Procédé selon la revendication 10, **caractérisé en ce qu'**un agent de contrôle de chaîne est ajouté au mélange de (méth)acrylate(s) d'alkyle et de monomère(s) polaire(s).

9. Procédé selon la revendication 11, **caractérisé en ce que** l'agent de contrôle de chaîne est du n-dodécyl mercaptan.
